# EUROPEAN PATENT SPECIFICATION

(11) **EP 4 271 067 B1**
(45) Date of publication and mention of the grant of the patent: **19.11.2025**
(21) Application number: 21932064.5
(22) Date of filing: 23.03.2021
(51) Int. Cl.: H04W 64/00

(54) **POSITIONING REFERENCE SIGNAL ON-DEMAND CONFIGURATION**
VERFAHREN UND VORRICHTUNG ZUR DRAHTLOSEN KOMMUNIKATION
PROCÉDÉ ET DISPOSITIF DE COMMUNICATION SANS FIL

(43) Date of publication of application: 01.11.2023
(73) Proprietor: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LU, Qianxi, Dongguan, Guangdong 523860 (CN); LIU, Yang, Dongguan, Guangdong 523860 (CN)
(74) Representative: Santarelli
(86) International application number: PCT/CN2021/082281
(87) International publication number: WO 2022/198432

(56) References cited:
- WO-A1-2020/068355
- WO-A1-2020/092715
- CN-A- 110 637 418
- CN-A- 111 448 834
- CN-A- 112 449 745
- INTERDIGITAL INC: "Discussion on On-demand reference signals for positioning", vol. RAN WG2, no. Electronic; 20210125 - 20210205, 15 January 2021 (2021-01-15), XP051973561, Retrieved from the Internet <URL:https://ftp.3gpp.org/tsg_ran/WG2_RL2/TSGR2_113-e/Docs/R2-2100375.zip R2-2100375 (R17 NR POS A81122).doc> [retrieved on 20210115]
- XIAOMI: "Discussion on PRS enhancements", vol. RAN WG2, no. e-Meeting ;20210125 - 20210205, 14 January 2021 (2021-01-14), XP051972726, Retrieved from the Internet <URL:https://ftp.3gpp.org/tsg_ran/WG2_RL2/TSGR2_113-e/Docs/R2-2100813.zip R2-2100813 Discussion on PRS enhancements.doc> [retrieved on 20210114]
- ERICSSON: "Report on [Post112-e][608][POS] Support of on-demand PRS", vol. RAN WG2, no. Electronic meeting; 20210125 - 20210205, 14 January 2021 (2021-01-14), XP051974319, Retrieved from the Internet <URL:https://ftp.3gpp.org/tsg_ran/WG2_RL2/TSGR2_113-e/Docs/R2-2101389.zip R2-2101389 Email Disc on-demand PRS.docx> [retrieved on 20210114]
- INTERDIGITAL INC.: "Discussion on On-demand reference signals for positioning", 3GPP DRAFT; R2-2100375, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20210125 - 20210205, 15 January 2021 (2021-01-15), Mobile Competence Centre ; 650, route des Lucioles ; F-06921 Sophia-Antipolis Cedex ; France , XP051973561
- OPPO: "Discussion on on-demand DL-PRS", 3GPP DRAFT; R2-2100107, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210101, 15 January 2021 (2021-01-15), Mobile Competence Centre ; 650, route des Lucioles ; F-06921 Sophia-Antipolis Cedex ; France , XP051973323

## Description

### TECHNICAL FIELD

Embodiments of the present disclosure relate to the field of communication, and more particularly to, a method for wireless communication, a location management function (LMF) entity, an access network device and a storage medium.

### BACKGROUND

In a new radio (NR) system, positioning can be realized based on a positioning reference signal (PRS). In order to improve efficiency, reduce delay and improve positioning accuracy, an on-demand PRS is introduced in release 17 (R17, or Rel17), that is, an appropriate PRS configuration is requested based on the requirements of a terminal device or a location management function (LMF) entity. However, in the on-demand PRS, how to realize PRS configuration is an urgent problem to be solved.

Background may be found in InterDigital Inc.: "Discussion on On-demand reference signals for positioning", 3GPP Draft; R2-2100375, 3rd Generation Partnership Project (3GPP), Mobile Competence Centre; 650, route des Lucioles; F-06921 Sophia-Antipolis Cedex; France, vol. RAN WG2, no. Electronic; 20210125 - 20210205, 15 January 2021 (2021-01-15), XP051973561. Background may also be found in XIAOMI: "Discussion on PRS enhancements", 3GPP DRAFT; R2-2100813, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. e-Meeting; 20210125 - 20210205 14 January 2021 (2021-01-14), XP051972726.

### SUMMARY

The embodiments of the disclosure provide methods for wireless communication, a LMF entity, an access network device and a storage medium. After a terminal device has initiated an on-demand PRS request, the LMF entity can activate corresponding PRS configuration information without waiting for a PRS configuration update feedback from each base station or a transmission and reception point (TRP), thus unnecessary signaling overhead between the terminal device and the LMF entity and the base station or the TRP can be avoided, thereby optimizing the performance of the communication system.

The invention is set out in the appended set of claims.

Through the technical scheme, after a terminal device initiates an on-demand PRS request, the LMF entity can activate corresponding PRS configuration information without waiting for a PRS configuration update feedback from each base station or TRP, thus unnecessary signaling overhead between the terminal device and the LMF entity and the base station or the TRP can be avoided, thereby optimizing the performance of the communication system.

### BRIEF DESCRIPTION OF THE DRAWINGS

FIG. 1 is a schematic diagram of architecture of a communication system applied in embodiments of the present disclosure.
FIG. 2 is a schematic flowchart of an on-demand PRS according to present disclosure.
FIG. 3 is a schematic flowchart of a method for wireless communication according to an embodiment of the present disclosure.
FIG. 4 is a schematic flowchart of an on-demand PRS according to an embodiment of the present disclosure.
FIG. 5 is a schematic flowchart of a method for wireless communication according to another embodiment of the present disclosure.
FIG. 6 is a schematic flowchart of a method for wireless communication provided according to yet another embodiment of the present disclosure not covered by the invention.
FIG. 7 is a schematic block diagram of an LMF entity according to an embodiment of the present disclosure.
FIG. 8 is a schematic block diagram of an access network device according to an embodiment of the present disclosure.
FIG. 9 is a schematic block diagram of a terminal device according to an embodiment of the present disclosure not covered by the invention.
FIG. 10 is a schematic block diagram of a communication device according to an embodiment of the present disclosure not covered by the invention.
FIG. 11 is a schematic block diagram of an apparatus according to an embodiment of the present disclosure not covered by the invention.
FIG. 12 is a schematic block diagram of a communication system according to an embodiment of the present disclosure not covered by the invention.

### DETAILED DESCRIPTION

The technical scheme in the embodiments of the disclosure will be described below in conjunction with the drawings in the embodiments of the disclosure. It is apparent that the described embodiments are parts of the embodiments of the disclosure, not all of the embodiments.

The technical scheme of the embodiments of the present disclosure can be applied to various communication systems, such as global system of mobile communication (GSM) system, code division multiple access (CDMA) system, wideband code division multiple access (WCDMA) system, general packet radio service (GPRS), long term evolution (LTE) system, advanced long term evolution (LTE-A) system, new radio (NR) system, evolution system of NR system, LTE-based access to unlicensed spectrum (LTE-U) system, NR-based access to unlicensed spectrum (NR-U) system, non-terrestrial networks (NTN) system, universal mobile telecommunications system (UMTS), wireless local area network (WLAN), wireless fidelity (Wi-Fi), fifth-generation (5G) system or other communication systems.

In general, traditional communication systems support a limited number of connections and the connections are easy to implement. However, with the development of communication technology, mobile communication systems will not only support traditional communication, but also support, for example, device to device (D2D) communication, machine to machine (M2M) communication, machine type communication (MTC), vehicle to vehicle (V2V) communication, or vehicle to everything (V2X) communication, etc. Embodiments of the present disclosure may also be applied to these communication systems.

In some embodiments, the communication system in embodiments of the present disclosure may be applied to a carrier aggregation (CA) scenario, a dual connectivity (DC) scenario, or a standalone (SA) networking scenario.

In some embodiments, the communication system in the embodiments of the present disclosure may be applied to an unlicensed spectrum, and the unlicensed spectrum may also be considered as a shared spectrum. Optionally, the communication system in the embodiments of the present disclosure may also be applied to a licensed spectrum, and the licensed spectrum may also be considered as a non-shared spectrum.

Embodiments of the present disclosure are described in connection with a network device and a terminal device. The terminal device may also be referred to as a user equipment (UE), an access terminal, a subscriber unit, a subscriber station, a mobile station, a remote terminal, a mobile device, a user terminal, a terminal, a wireless communication device, a user agent or a user device, etc.

The terminal device may be a station (ST) in the WLAN, a cellular telephone, a cordless telephone, a session initiation protocol (SIP) telephone, a wireless local loop (WLL) station, a personal digital assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved public land mobile network (PLMN) network, etc.

In the embodiments of the present disclosure, the terminal device may be deployed on land, and include indoor or outdoor device, hand-held device, wearable device or vehicle-mounted device. The terminal device can also be deployed on the water (such as on the ships, etc.). The terminal device can also be deployed in the air (such as, in airplanes, in balloons and in satellites, etc.).

In the embodiments of the present disclosure, the terminal device may be a mobile phone, a Pad, a computer with wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of example and not limitation, in the embodiments of the present disclosure, the terminal device may also be a wearable device. The wearable device can also be referred to as a wearable smart device, which is a general term of wearable devices that are intelligently designed and developed by applying wearable technology to daily wear, such as, glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. The generalized wearable smart device has full functions and a large size, and the generalized wearable smart device can realize complete or partial functions without relying on smart phones, such as smart watches or smart glasses, and the generalized wearable smart device only focus on certain application functions and need to be used in conjunction with other devices (such as, smart phones), such as, various smart bracelets and smart jewelry for monitoring physical signs.

In the embodiments of the present disclosure, the network device may be a device configured to communicate with a mobile device, and the network device may be an access point (AP) in a WLAN, a base transceiver station (BTS) in a GSM or CDMA, a NodeB (NB) in a WCDMA, an evolved Node B (eNB or eNodeB) in an LTE, a relay station or an access point, a vehicle-mounted device, a wearable device, a network device or a gNB in an NR network, a network device in a future evolved PLMN network or a network device in an NTN network, etc.

By way of example and not limitation, in the embodiments of the present disclosure, the network device may have mobility characteristics, for example, the network device may be a mobile device. In some embodiments, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite, and the like. In some embodiments, the network device may also be a base station located on land, water, etc.

In the embodiments of the present disclosure, the network device can provide a service for a cell, and the terminal device communicates with the network device through transmission resources (e.g. frequency resources, or spectrum resources) used by the cell. The cell may be a cell corresponding to the network device (e.g. base station), and the cell may belong to a macro base station or a base station corresponding to a small cell. The small cell can include a metro cell, a micro cell, a pico cell, a femto cell, etc. These small cells have characteristics of small coverage and low transmission power, and there small cells are suitable for providing a high-speed data transmission service.

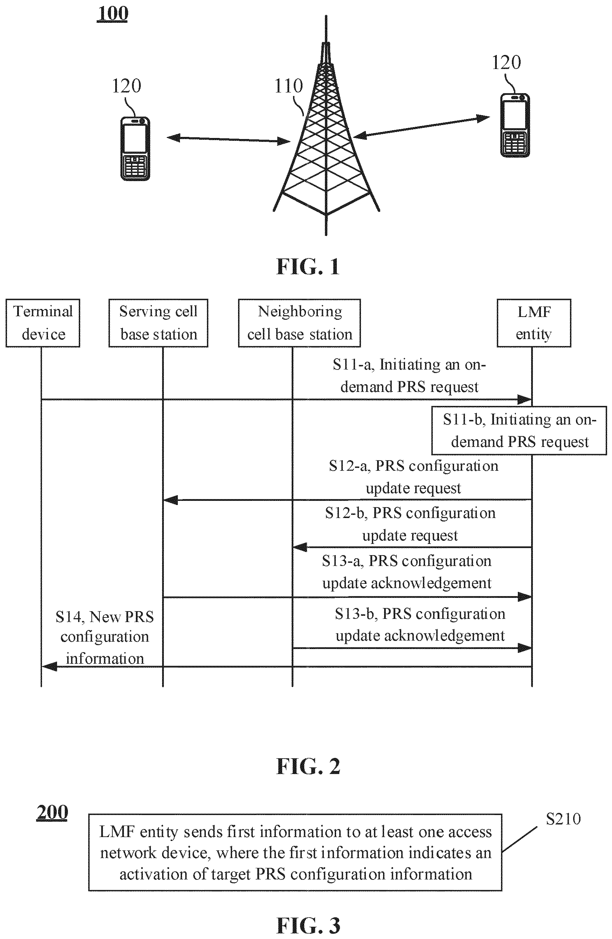

Exemplarily, the communication system 100 to which the embodiments of the present disclosure are applied is illustrated in FIG. 1. The communication system 100 may include a network device 110. The network device 110 may be a device that communicates with a terminal device 120 (which also referred to as a communication terminal or terminal). The network device 110 may provide communication coverage for a particular geographic area and may communicate with terminal devices located within the coverage.

FIG. 1 exemplarily illustrates one network device and two terminal devices. In some embodiments, the communication system 100 may include multiple network devices, and other numbers of terminal devices may be included within the coverage of each network device, which is not limited by the embodiments of the present disclosure.

In some embodiments, the communication system 100 may also include other network entities, such as, network controllers, mobility management entities, etc., which are not limited by the embodiments of the present disclosure.

It should be understood that a device having a communication function in the network or system in the embodiments of the present disclosure may be referred to as a communication device. The communication system 100 illustrated in FIG. 1 is taken as an example, the communication device may include a network device 110 and a terminal device 120 that both have the communication function, and the network device 110 and the terminal device 120 may be specific devices described above, which will not be described herein. The communication device may also include other devices in the communication system 100, such as, network controllers, mobility management entities and other network entities, which are not limited in the embodiments of the present disclosure.

It should be understood that the terms "system" and "network" are often used interchangeably herein. In the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the disclosure generally indicates that the relationship between the related objects is "or".

Terms used in the embodiments of the present disclosure are used only for explanation of specific embodiments of the present disclosure and the terms are not intended to limit the present disclosure. The terms "first", "second", "third", "fourth" and the like in the specification and claims of the present disclosure and the accompanying drawings are used to distinguish different objects and are not used to describe a particular sequence. Furthermore, the terms "including" and "having" and any variations thereof are intended to cover non-exclusive inclusion.

It should be understood that the reference to "indication" in the embodiments of the present disclosure may be a direct indication, may be an indirect indication, or may be indicative of an association. For example, A indicates B, which can mean that A directly indicates B, for example, B can be obtained through A; it can also mean that A indirectly indicates B, for example, A indicates C, and B can be obtained by C; and it can also indicate that there is an association between A and B.

In the description of the embodiments of the present disclosure, the term "correspondence" may mean that there is a direct correspondence or an indirect correspondence between the two, may also mean that there is an association relationship between the two, and may also be a relationship between indication and being indicated, configuration and being configured, etc.

In the embodiments of the present disclosure, "predefined" may be achieved by pre-storing corresponding codes, tables or other means used for indicating relevant information in devices (e.g., including terminal devices and network devices), and the present disclosure is not limited to the specific implementation thereof. For example, predefined may refer to what is defined in the protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

In order to better understand the embodiments of the present disclosure, the positioning technology related to the present disclosure is described.

Location is one of the indispensable applications in daily life, and the requirements for latency and accuracy in positioning are becoming increasingly strict. In many positioning applications, an accurate positioning is usually achieved through a combination of various technologies. For example, 1) location information in outdoor scenarios provided based on global navigation satellite system (GNSS); 2) radio technology (e.g. LTE network which provides multiple options to position users, wireless network, terrestrial beacon system, etc.); 3) inertial measurement units (IMU) or sensors (e.g. tracking user location based on accelerometers, gyroscopes, magnetometers or vertical positioning using atmospheric pressure sensors). These technologies are expected to play an important role in achieving accurate user positioning in the future.

An enhanced positioning capability of the 3rd generation partnership project (3GPP) NR system brings additional gains. The operations of low frequency band and high frequency band (i.e. FR1 and FR2) and the use of a large number of antenna arrays provide additional freedom and greatly improve the positioning accuracy. Based on observed time difference of arrival (OTDOA), uplink time difference of arrival (ULTDOA), Cell-ID or enhanced Cell-ID (E-Cell-ID) and other positioning technologies, time measurement with large bandwidth (low frequency band and high frequency band) brings better performance for user positioning. More accurate user location is achieved by using massive antenna systems (such as, multiple in multiple out (MIMO)) and combining time measurement with spatial and angular domains of propagation channels.

The release 15 (Rel-15) NR positioning project defines Cell-ID (including a part of cell identifiers) and independent radio access technology (RAT-independent) positioning method based on a long term evolution positioning protocol (LPP). The release 16 (Rel-16) mainly studies the RAT-dependent positioning method of NR standalone networking, which includes downlink time difference of arrival (DL-TDOA), downlink angle of departure (DL-AoD), UL-TDOA, uplink angle of departure (UL-AoD), round trip time (RTT) and E-Cell-ID.

The positioning project of 3GPP R17 mainly takes account of improving the accuracy, reducing the delay and improving the efficiencies of the terminal side and the network side, to enhance the positioning method and related reference signals.

In order to improve efficiency, reduce delay and improve positioning accuracy, R17 NR positioning proposes an enhanced on-demand PRS. The main gains include the following three aspects.

In an aspect of efficiency, on-demand downlink PRS (DL-PRS) avoids unnecessary overhead and wasted energy in a case that no terminal device positioning is required at a particular time or in a particular area of a network. In the case of beam-formed DL-PRS, DL-PRS transmission in all beam sweeping directions may result in an unnecessary DL-PRSs transmission.

In an aspect of latency, a current DL-PRS configuration may not be sufficient to meet the response time requirements of a location services (LCS) client. For example, the current DL-PRS configuration may have too large a periodicity.

In an aspect of accuracy, the current DL-PRS configuration may not be sufficient to meet the accuracy requirements of the LCS client. For example, the current DL-PRS configuration may have a too small bandwidth, too few repetitions, etc.

In order to better understand the embodiments of the present disclosure, the downlink positioning reference signal related to the present disclosure is described.

The downlink positioning reference signal mainly includes PRS. In Rel-16, PRS is uniformly configured by an LMF entity and sent to a terminal device by an LPP message. Specifically, each base station (such as, gNB) or transmission reception point (TRP) reports a PRS configuration that can be sent by itself to the LMF entity, and the LMF entity coordinates multiple PRS configurations reported by multiple gNBs or TRPs, and generates final PRS configuration information based on these configurations and sends the final PRS configuration information to the terminal devices and gNBs/TRPs.

Because different terminals and different positioning requests have different accuracy requirements, the unified PRS configuration may not meet the accuracy requirements of individual terminals and individual applications; and on the other hand, for terminals that currently have no positioning requirements, the continuous transmission of PRS by the network side will also cause addition power consumption. The main idea of the on-demand PRS is to request the appropriate PRS configuration based on the requirements of the terminal or the LMF entity, so that the network side can meet the accuracy requirements to the maximum extent on the basis of minimum transmission power consumption.

In some implementations, the flow of the on-demand PRS is illustrated in FIG. 2. Specifically, the flow of the on-demand PRS illustrated in FIG. 2 can include operations S11-a, S11-b, S12-a, S12-b, S13-a, S13-b and S14.

In operation S11-a, a terminal device initiates an on-demand PRS request.

In operation S11-b, an LMF entity initiates an on-demand PRS request.

In operation S12-a, the LMF entity sends a PRS configuration update request to a serving cell base station.

In operation S12-b, the LMF entity sends a PRS configuration update request to a neighboring cell base station of the serving cell.

In operation S13-a, the service cell base station sends a PRS configuration update acknowledgement to the LMF entity.

In operation S13-b, the neighboring cell base station of the serving cell sends the PRS configuration update acknowledgement to the LMF entity.

In operation S14, the LMF entity sends new PRS configuration information to the terminal device.

It should be noted that only one of the operations S11-a or S11-b can be performed or the operations S11-a and S11-b can be performed simultaneously.

In other implementations, the base station in FIG. 2 may also be a TRP.

If the terminal device or LMF entity initiates an on-demand PRS request, the network is required to request the configuration modification and configuration update to each gNB or TRP, and after receiving the requests, the gNB or TRP is required to feed back the requests to LMF entity one by one, which undoubtedly causes additional signaling overhead. In order to solve this problem, the present disclosure proposes a scheme of activating/deactivating on-demand PRS.

The technical scheme of the present disclosure will be described in detail by specific embodiments below.

FIG. 3 is a schematic flowchart of a method 200 for wireless communication according to an embodiment of the present disclosure. As illustrated in FIG. 3, the method 200 includes at least some of the following.

In operation S210, an LMF entity sends first information to at least one access network device, where the first information indicates an activation of target PRS configuration information.

In the embodiment of the present disclosure, after a terminal device initiates the on-demand PRS request, the LMF entity sends the first information to at least one access network device to instruct the at least one access network device to activate the target PRS configuration information. In the embodiments of the present disclosure not covered by the invention, after the LMF entity initiates the on-demand PRS request, the LMF entity sends the first information to at least one access network device to instruct the at least one access network device to activate the target PRS configuration information.

In some embodiments, before the operation S210 is performed, the LMF entity receives request information from the terminal device, and the request information requests PRS configuration on demand. That is to say, before the operation S210 is performed, the terminal device initiates an on-demand PRS request.

In some implementations, the request information includes PRS configuration information corresponding to a current service type or a positioning accuracy, or the request information includes an index of PRS configuration information corresponding to a current service type or a positioning accuracy. That is to say, the terminal device may determine PRS configuration information that needs to be requested based on the current service type or the positioning accuracy.

In some implementations, in the case that the request information includes the index of PRS configuration information corresponding to a current service type or a positioning accuracy, the network pre-configures multiple sets of PRS configuration information and indexes corresponding to the multiple sets of PRS configuration information for the terminal device. Therefore, the terminal device requests the index corresponding to the PRS configuration from the network based on the requirement of the current service type or the positioning accuracy.

In some implementations, the request information may include specific parameters of the requested PRS configuration information. Specifically, the request information includes, but not limited to, at least one of:
- changes to period, such as, the increase or decrease of period;
- time offset;
- repetitions;
- bandwidth;
- comb patterns;
- a change amount of the transmission power or frequency of the PRS, for example, the change amount of transmission power or frequency of the PRS when measuring low RSRP on the PRS;
- a change (increase/decrease) amount of beam, or a change (increase/decrease) amount of the transmit beam of the TRP or cell; or
- turning on or turning off some PRS configurations of the TRP/cell, or deactivating some PRS configurations of the TRP/cell, for example, when high interference is measured, some PRS configurations of the TRP or cell are turned on or turned off, or some PRS configurations of the TRP or cell are deactivated.

In some embodiments not covered by the invention, before the operation S210 is performed, the LMF entity initiates an on-demand PRS configuration request. That is to say, before the operation S210 is performed, the LMF entity initiates an on-demand PRS request.

In the embodiments of the present disclosure, after the LMF entity indicates the activation of target PRS configuration information, at least one access network device is not required to respond to the activation indication, and the LMF entity is not required wait for the feedback from each access network device, thus unnecessary signaling overhead between the terminal device, the LMF entity and the access network device can be avoided, thereby optimizing the performance of the communication system.

In some embodiments, the at least one access network device includes at least one of: a base station in a serving cell of the terminal device, a TRP in a serving cell of the terminal device, a base station in a neighboring cell of the serving cell of the terminal device, or a TRP in a neighboring cell of the serving cell of the terminal device.

The neighboring cell of the service cell may be one or multiple, which is not limited in the present disclosure.

In some embodiments, the first information includes the target PRS configuration information or an index of the target PRS configuration information. That is to say, the LMF entity may instruct the at least one access network device to activate the PRS configuration information included in the first information.

It should be noted that the network pre-configures multiple sets of PRS configuration information and indexes corresponding to the multiple sets of PRS configuration information for the at least one access network device. In this case, the first information sent from the LMF entity to the at least one access network device includes the index of the target PRS configuration information, and the at least one access network device may obtain or identify the corresponding target PRS configuration information based on the index of the target PRS configuration information.

In some embodiments, the LMF entity sends second information to the terminal device, where the second information includes the target PRS configuration information or an index of the target PRS configuration information. Thus, the terminal device can be informed of the activated PRS configuration information or the index of the PRS configuration information determined by the LMF entity, and the terminal device can perform a PRS measurement based on the activated PRS configuration information, and perform positioning estimation based on a result of the PRS measurement.

The second information may be an acknowledgement of the on-demand PRS request.

It should be noted that the network pre-configures multiple sets of PRS configuration information and indexes corresponding to the multiple sets of PRS configuration information for the terminal device. In this case, the second information sent from the LMF entity to the terminal device includes the index of the target PRS configuration information, and the terminal device may obtain the corresponding target PRS configuration information based on the index of the target PRS configuration information.

In some embodiments, before the operation S210 is performed, the LMF entity pre-configures multiple sets of PRS configuration information and indexes corresponding to the multiple sets of PRS configuration information for at least one of the terminal device or at least one access network device based on a PRS capability or PRS configuration supported by the at least one access network device. Specifically, the pre-configuration is achieved by the following operations.

The LMF entity obtains the PRS capability or the PRS configuration supported by the at least one access network device.

The LMF entity generates, based on the PRS capability or the PRS configuration supported by the at least one access network device, multiple pieces of PRS configuration information and indexes of the multiple pieces of PRS configuration information.

The LMF entity sends third information to the terminal device, where the third information indicates the multiple pieces of PRS configuration information and the indexes of the multiple pieces of PRS configuration information. In the embodiments not covered by the invention, The LMF entity sends third information to the at least one access network device, where the third information indicates the multiple pieces of PRS configuration information and the indexes of the multiple pieces of PRS configuration information.

That is to say, in the embodiments of the present disclosure, the terminal device, the access network device (such as, the base station or TRP) and the LMF entity can coordinate based on the PRS capability or PRS configuration to pre-configure multiple sets of PRS configuration information and indexes corresponding to the multiple pieces of PRS configuration information.

In some embodiments, after the operation S210 is performed, the LMF entity receives fourth information form the at least one access network device. The fourth information indicates a refusal to activate the target PRS configuration information, or, the fourth information indicates an update of the PRS capability or the PRS configuration supported by the at least one access network device.

It should be noted that the fourth information indicates a refusal to activate the target PRS configuration information, that is, the at least one access network device refuses to activate the target PRS configuration information that the LMF entity indicates to activate. In this case, it may be that the target PRS configuration information has changed, or that the target PRS configuration information is not the preferred PRS configuration information.

In some embodiments, in a case that the fourth information indicates the update of the PRS capability or PRS configuration supported by the at least one access network device, the LMF entity is required to generate new PRS configuration information and indicate the new PRS configuration information and index corresponding to the new PRS configuration information to the terminal device and the at least one access network device.

Therefore, in the embodiments of the present disclosure, after the terminal device initiates the on-demand PRS request, the LMF entity activates the target PRS configuration information without waiting for the PRS configuration update feedback from each base station or TRP, thus unnecessary signaling overhead between the terminal device, the LMF entity and the base station/TRP can be avoided, thereby optimizing the performance of the communication system.

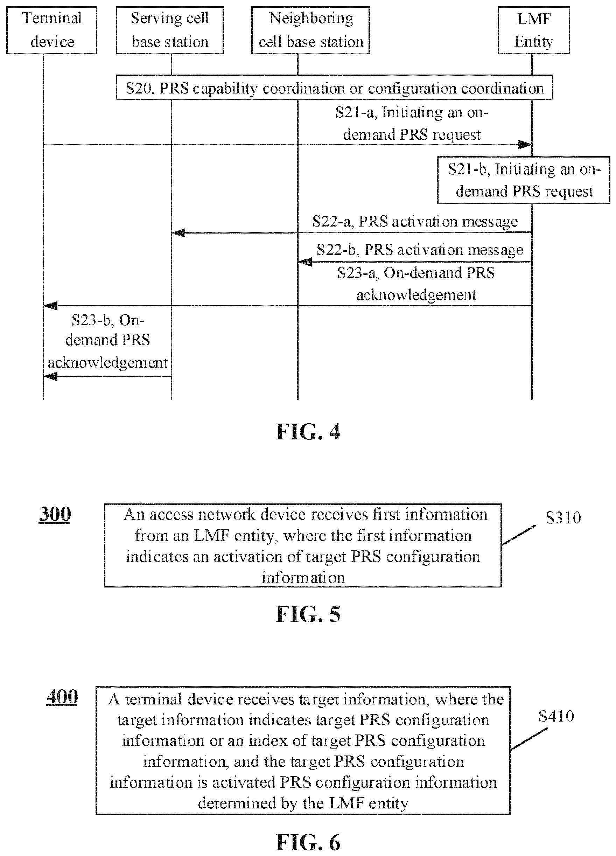

Specific scheme of the disclosure are described below based on one specific embodiment. As illustrated in FIG. 4, the scheme may include the operations S20, S21-a, S21-b, S22-a, S22-b, S23-a, S23-b.

In operation S20, PRS capability coordination or configuration coordination are performed between the serving cell base station, and the neighboring cell base station and the LMF entity to pre-configure multiple pieces of PRS configuration information and indexes corresponding to the multiple pieces of PRS configuration information.

In operation S21-a, the terminal device initiates an on-demand PRS request, where the on-demand PRS request may include requested PRS configuration information, or the on-demand PRS request may include an index of the requested PRS configuration information.

In operation S21-b not covered by the invention, the LMF entity initiates an on-demand PRS request, where the on-demand PRS request may include requested PRS configuration information, or the on-demand PRS request may include the index of the requested PRS configuration information.

In operation S22-a, the LMF entity sends a PRS activation message to the serving cell base station. The PRS activation message includes target PRS configuration information, or the PRS activation message may include an index of target PRS configuration information.

In operation S22-b, the LMF entity sends a PRS activation message to the neighboring cell base station. The PRS activation message includes target PRS configuration information, or the PRS activation message may include the index of the target PRS configuration information.

In operation S23-a, the LMF entity sends an on-demand PRS acknowledgement to the terminal device. The on-demand PRS acknowledgement includes the target PRS configuration information, or the on-demand PRS acknowledgement includes an index of the target PRS configuration information.

In operation S23-b not covered by the invention, the serving cell base station sends an on-demand PRS acknowledgement to the terminal device. The on-demand PRS acknowledgement may include the target PRS configuration information, or the on-demand PRS acknowledgement may include the index of the target PRS configuration information.

It should be noted that only one of the operations S21-a or S21-b can be performed, or the operations S21-a and S21-b can be performed simultaneously.

Specifically, the target PRS configuration information may be PRS configuration information that is activated through the selection and indication of the LMF entity based on the on-demand PRS request.

In some implementations, before the LMF entity performs the operation S22-a or S22-b, the serving cell base station and the neighboring cell base station report supported PRS capabilities or PRS configurations, and the LMF entity generates multiple pieces of PRS configuration information based on the reported PRS capabilities or PRS configurations and indicates each set of configuration information and the index corresponding to the set of configuration information.

In some implementations, in the operation S23-b, the serving cell base station may send an on-demand PRS acknowledgement to the terminal device through one of RRC signaling, MAC CE signaling, or DCI.

In some implementations, after the operation S22-a, the serving cell base station sends information A to the LMF entity. The information A indicates a refusal to activate the target PRS configuration information, or, the information A indicates an update of a PRS capability or PRS configuration supported by the serving cell base station. And/or, after the operation S22-b, the neighboring cell base station sends information B to the LMF entity. The information B indicates a refusal to activate the target PRS configuration information, or, the information B indicates an update of a PRS capability or PRS configuration supported by the neighboring cell base station.

In other implementations, the base station in FIG. 4 may also be the TRP.

It should be noted that there is no sequence when the S22-a and S22-b are performed, and similarly, there is no sequence when the S23-a and S23-b are performed.

The LMF entity-side embodiments of the present disclosure have been described in detail above with reference to FIG. 3 to FIG. 4. The access network device-side embodiments of the present disclosure will be described in detail below with reference to FIG. 5. It should be understood that the access network device-side embodiments correspond to the LMF entity-side embodiments, and similar descriptions may made with reference to the LMF entity-side embodiments.

FIG. 5 is a schematic flowchart of a method 300 for wireless communication according to an embodiment of the present disclosure. As illustrated in FIG. 5, the method 300 may include at least some of the following.

In operation S310, the access network device receives first information from an LMF entity, where the first information indicates an activation of target PRS configuration information.

In the embodiments of the present disclosure, after a terminal device initiates an on-demand PRS request, the access network device receives the first information from the LMF entity, and the access network device determines, based on the first information, whether to activate the target PRS configuration information that the LMF entity indicates to activate.

In some embodiments, the access network device includes one of: a base station in a serving cell of a terminal device, a TRP in a serving cell of a terminal device, a base station in a neighboring cell of a serving cell of a terminal device, or a TRP in a neighboring cell of a serving cell of a terminal device.

The serving cell may have one or multiple neighboring cells, which is not limited in the present disclosure.

In some implementations, the first information includes the target PRS configuration information or an index of the target PRS configuration information. That is to say, the LMF entity may instruct the access network device to activate the PRS configuration information included in the first information.

It should be noted that the network pre-configures multiple sets of PRS configuration information and indexes corresponding to the multiple sets of PRS configuration information for the access network device. In this case, the first information sent from the LMF entity to the access network device includes the index of the target PRS configuration information, and the access network device can obtain or identify the corresponding target PRS configuration information based on the index of the target PRS configuration information.

In some embodiments, before the operation S310 is performed, the access network device sends to the LMF entity a PRS capability or PRS configuration supported by the access network device, so that the LMF entity pre-configures multiple sets of PRS configuration information and indexes corresponding to the multiple sets of PRS configuration information for the terminal device and/or the access network device based on the PRS capability or PRS configuration supported by the access network device.

In some embodiments, the access network device receives third information from the LMF entity, where the third information indicates the multiple pieces of PRS configuration information and indexes of the multiple pieces of PRS configuration information.

That is to say, in the embodiments of the present disclosure, the terminal device, the access network device (such as, the base station or TRP) and the LMF entity can coordinate based on the PRS capability or PRS configuration to pre-configure multiple sets of PRS configuration information and indexes corresponding to the multiple sets of PRS configuration information.

In some embodiments, the access network device sends fourth information to the LMF entity.

The fourth information indicates a refusal to activate the target PRS configuration information, or, the fourth information indicates an update of a PRS capability or PRS configuration supported by the at least one access network device.

It should be noted that fourth information indicates a refusal to activate the target PRS configuration information, that is, the access network device refuses to activate the target PRS configuration information that the LMF entity indicates to activate. In this case, it may be that the target PRS configuration information has changed, or that the target PRS configuration information is not the preferred PRS configuration information.

In some embodiments, in a case that the fourth information indicates an update of a PRS capability or PRS configuration supported by the access network device, the LMF entity is required to generate new PRS configuration information and indicate the new PRS configuration information and an index corresponding to the new PRS configuration information to the terminal device and the access network device.

In some embodiments not covered by the invention, in a case that the access network device is a base station or a TRP in a serving cell of a terminal device, the access network device sends fifth information to the terminal device. The fifth information indicates activated PRS configuration information or an index of activated PRS configuration information. Therefore, the terminal device can obtain PRS configuration information or an index of PRS configuration information activated by the base station or TRP in the serving cell, and the terminal device can perform PRS measurement based on the activated PRS configuration information, and perform location estimation based on the result of the PRS measurement.

Therefore, in the embodiments of the present disclosure, after the terminal device initiates the on-demand PRS request, the access network device activates the target PRS configuration information based on the indication of the LMF entity without sending feedback for activating the PRS configuration information to the LMF entity, thus, unnecessary signaling overhead between the LMF entity and the base station or the TRP can be avoided, thereby optimizing the performance of the communication system.

The LMF entity-side embodiments of the present disclosure have been described in detail above with reference to FIG. 3 to FIG. 4, and the terminal device-side embodiments of the present disclosure will be been described in detail below with reference to FIG. 6. It should be understood that the terminal device-side embodiments correspond to the LMF entity-side embodiments, and similar descriptions may made with reference to the LMF entity-side embodiments.

FIG. 6 is a schematic flowchart of a method 400 for wireless communication according to an embodiment of the present disclosure not covered by the invention. As illustrated in FIG. 6, the method 400 may include at least some of the following.

In operation S410, the terminal device receives target information, where the target information indicates target PRS configuration information or an index of target PRS configuration information, and the target PRS configuration information is activated PRS configuration information determined by the LMF entity.

In the embodiments of the present disclosure, the terminal device can be informed of the activated PRS configuration information determined by the LMF entity, or the terminal device can be informed of an index of the PRS configuration information determined by the LMF entity, and the terminal device can perform a PRS measurement based on the activated PRS configuration information, and perform location estimation based on a result of the PRS measurement.

In some embodiments, before the operation S410 is performed, the terminal device sends request information to the LMF entity, and the request information requests PRS configuration on demand. That is to say, before the operation S410 is performed, the terminal device initiates an on-demand PRS request.

In some implementations, the request information includes PRS configuration information corresponding to a current service type or a positioning accuracy, or the request information includes an index of PRS configuration information corresponding to a current service type or a positioning accuracy. That is to say, the terminal device may determine PRS configuration information to be requested based on the current service type or the positioning accuracy.

In some implementations, in the case that the request information includes the index of PRS configuration information corresponding to the positioning accuracy or the current service type, the network pre-configures multiple sets of PRS configuration information and indexes corresponding to the multiple sets of PRS configuration information for the terminal device. Therefore, the terminal device requests the index corresponding to the PRS configuration from the network based on the current service type or positioning accuracy requirement.

In some implementations, the request information may include specific parameters of the requested PRS configuration information. Specifically, the request information includes, but not limited to, at least one of:
- changes to period, such as, the increase or decrease of period;
- time offset;
- repetitions;
- bandwidth;
- comb patterns;
- a change amount of the transmission power or frequency of the PRS, for example, the change amount of transmission power or frequency of the PRS when measuring low RSRP on the PRS;
- a change (increase/decrease) amount of beam, or a change (increase/decrease) amount of the transmit beam of the TRP or cell; or
- turning on or turning off some PRS configurations of the TRP or cell, or deactivating some PRS configurations of the TRP/cell, for example, when high interference is measured, some PRS configurations of the TRP or cell are turned on or turned off, or some PRS configurations of the TRP or cell are deactivated.

In some embodiments, the target information includes the target PRS configuration information or an index of the target PRS configuration information.

It should be noted that the network pre-configures multiple sets of PRS configuration information and indexes corresponding to the multiple sets of PRS configuration information for the terminal device. In this case, the target information may include the index of the target PRS configuration information, and the terminal device may obtain or identify a corresponding target PRS configuration information based on the index of the target PRS configuration information.

In some embodiments, the operation S410 may specifically be the following operation.

The terminal device receives the target information from the access network device.

In some embodiments, the target information is carried by one of: RRC signaling, MAC CE signaling, or DCI.

In some embodiments, the access network device is a base station or a TRP in a serving cell of the terminal device.

In some embodiments, the operation S410 may specifically be the following operation.

The terminal device receives the target information from the LMF entity.

Therefore, in the embodiments of the present disclosure, after the terminal device or the LMF entity initiates the on-demand PRS request, the access network device or the LMF entity can indicate an activation of the target PRS configuration information to the terminal device, and the terminal device is not required to send feedback information to the LMF entity or the access network device, thus unnecessary signaling overhead between the terminal device, the LMF entity and the base station/TRP can be avoided, thereby optimizing the performance of the communication system.

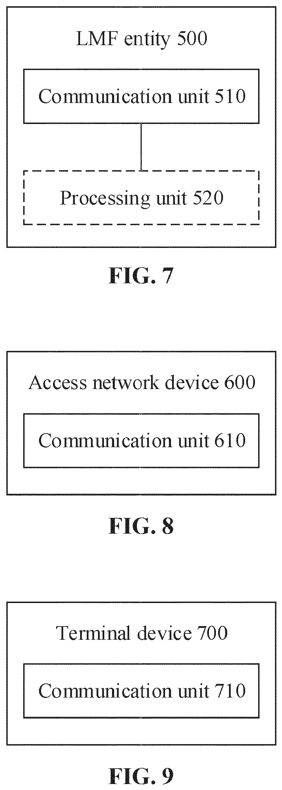

The method embodiments of the present disclosure have been described in detail above with reference to FIG. 3 to FIG. 6, and the device embodiments of the present disclosure will be described in detail below with reference to FIG. 7 to FIG. 12. It should be understood that the device embodiments correspond to the method embodiments, and similar descriptions may made reference to the method embodiments.

FIG. 7 illustrates a schematic block diagram of an LMF entity 500 according to an embodiment of the present disclosure. As illustrated in FIG. 7, the LMF entity 500 includes a communication unit 510.

The communication unit 510 is configured to send first information to at least one access network device, where the first information indicates an activation of target PRS configuration information.

In some embodiments, the first information includes the target PRS configuration information or an index of the target PRS configuration information.

In some embodiments, the communication unit 510 is further configured to send second information to a terminal device, where the second information includes the target PRS configuration information or an index of the target PRS configuration information.

In some embodiments, the LMF entity 500 further includes a processing unit 520.

The processing unit 520 is configured to obtain a PRS capability or PRS configuration supported by the at least one access network device.

The processing unit 520 is configured to generate multiple pieces of PRS configuration information and indexes of the multiple pieces of PRS configuration information based on the PRS capability or PRS configuration supported by the at least one access network device.

The communication unit 510 is further configured to send third information to the terminal device, where the third information indicates the multiple pieces of PRS configuration information and the indexes of the multiple pieces of PRS configuration information. In the embodiments not covered by the invention, the communication unit 510 is further configured to send third information to the at least one access network device, where the third information indicates the multiple pieces of PRS configuration information and the indexes of the multiple pieces of PRS configuration information.

In some embodiments, the communication unit 510 is further configured to receive fourth information from the at least one access network device.

The fourth information indicates a refusal to activate the target PRS configuration information, or the fourth information indicates an update of a PRS capability or PRS configuration supported by the at least one access network device.

In some embodiments, the communication unit 510 is further configured to receive request information from a terminal device for requesting PRS configuration on demand.

In some embodiments, the request information includes PRS configuration information corresponding to a current service type or a positioning accuracy, or the request information includes an index of PRS configuration information corresponding to a current service type or a positioning accuracy.

In some embodiments not covered by the invention, the communication unit 510 is further configured to initiate an on-demand PRS configuration request.

In some embodiments, the at least one access network device includes at least one of: a base station in a serving cell of a terminal device, a transmission and reception point (TRP) in a serving cell of a terminal device, a base station in a neighboring cell of a serving cell of a terminal device, or a TRP in a neighboring cell of a serving cell of a terminal device.

In some embodiments, the communication unit may be a communication interface or transceiver, or the communication unit may be an input-output interface of a communication chip or a system-on-chip. The processing unit may be one or more processors.

It should be understood that the LMF entity 500 according to the embodiment of the present disclosure may correspond to the LMF entity in the method embodiments of the present disclosure. The above and other operations and/or functions of all units in the LMF entity 500 respectively implement the corresponding workflows of the LMF entity in the method 200 illustrated in FIG. 3, which are not repeated herein for the sake of brevity.

FIG. 8 shows a schematic block diagram of an access network device 600 according to an embodiment of the present disclosure. As illustrated in FIG. 8, the access network device 600 includes a communication unit 610.

The communication unit 610 is configured to receive first information from an LMF entity, where the first information indicates an activation of the target PRS configuration information.

In some embodiments, the first information includes the target PRS configuration information or an index of the target PRS configuration information.

In some embodiments, the communication unit 610 is further configured to send to the LMF entity a PRS capability or PRS configuration supported by the access network device.

In some embodiments not covered by the invention, the communication unit 610 is further configured to receive third information from the LMF entity, where the third information indicates multiple pieces of PRS configuration information and indexes of the multiple pieces of PRS configuration information.

In some embodiments, the communication unit 610 is further configured to send fourth information to the LMF entity.

The fourth information indicates a refusal to activate the target PRS configuration information, or the fourth information indicates an update of a PRS capability or PRS configuration supported by the access network device.

In some embodiments not covered by the invention, in the case that the access network device is a base station or a TRP in a serving cell of a terminal device, the communication unit 610 is further configured to send fifth information to the terminal device. The fifth information indicates activated PRS configuration information, or the fifth information indicates an index of the activated PRS configuration information.

In some embodiments, the access network device includes one: a base station in a serving cell of a terminal device, a transmission and reception point (TRP) in a serving cell of a terminal device, a base station in a neighboring cell of a serving cell of a terminal device, or a TRP in a neighboring cell of a serving cell of a terminal device.

In some embodiments, the communication unit may be a communication interface or transceiver, or the communication unit may be an input-output interface of a communication chip or a system-on-chip.

It should be understood that the access network device 600 according to an embodiment of the present disclosure may correspond to the access network device in the method embodiments of the present disclosure. The above and other operations and/or functions of all units in the access network device 600 respectively implement the corresponding workflows of the access network device in the method 300 illustrated in FIG. 5, which are not repeated herein for the sake of brevity.

FIG. 9 shows a schematic block diagram of a terminal device 700 according to an embodiment of the present disclosure not covered by the invention. As illustrated in FIG. 9, the terminal device 700 includes a communication unit 710.

The communication unit 710 is configured to receive target information, where the target information indicates target PRS configuration information or an index of target PRS configuration information, and the target PRS configuration information is activated PRS configuration information determined by an LMF entity.

In some embodiments, the target information includes the target PRS configuration information or the index of the target PRS configuration information.

In some embodiments, the communication unit 710 is specifically configured to receive the target information from an access network device.

In some embodiments, the target information is carried by one of: radio resource control (RRC) signaling, media access control control element (MAC CE) signaling, or downlink control information (DCI).

In some embodiments, the access network device is a base station or a transmission receiving point (TRP) in a serving cell of the terminal device.

In some embodiments, the communication unit 710 is specifically configured to receive the target information from the LMF entity.

In some embodiments the communication unit 710 is further configured to send request information for requesting PRS configuration on demand.

In some embodiments, the request information includes PRS configuration information corresponding to a current service type or a positioning accuracy, or the request information includes an index of PRS configuration information corresponding to a current service type or a positioning accuracy.

In some embodiments, the communication unit may be a communication interface or transceiver, or the communication unit may be an input-output interface of a communication chip or a system-on-chip.

It should be understood that the terminal device 700 according to the embodiment of the present disclosure may correspond to the terminal device in the method embodiments of the present disclosure. The above and other operations and/or functions of all units in the terminal device 700 respectively implement the corresponding workflows of the terminal device in the method 400 illustrated in FIG. 6, which are not repeated herein for the sake of brevity.

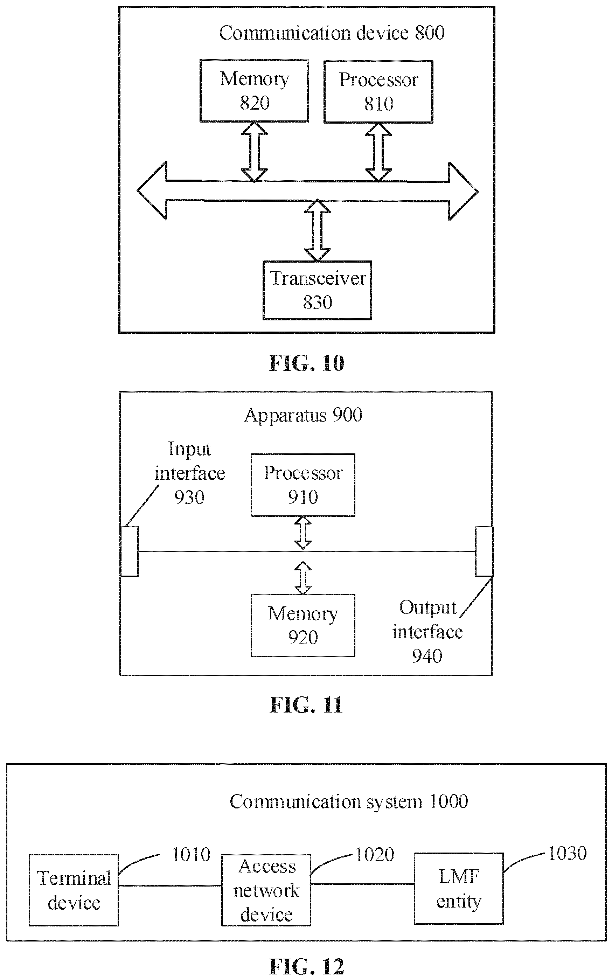

FIG. 10 is a schematic structural diagram of a communication device 800 according to an embodiment of the present disclosure not covered by the invention. The communication device 800 illustrated in FIG. 10 includes a processor 810. The processor 810 is configured to invoke and execute a computer program from a memory to implement the method in the embodiments of the present disclosure.

In some embodiments, as illustrated in FIG. 10, the communication device 800 may also include a memory 820. The processor 810 may invoke and execute a computer program from the memory 820 to implement the method in embodiments of the present disclosure.

The memory 820 may be a separate device independent of the processor 810 or may be integrated into the processor 810.

In some embodiments, as illustrated in FIG. 10, the communication device 800 may also include a transceiver 830 and the processor 810 may control the transceiver 830 to communicate with other devices. In particular, the transceiver 830 may send information or data to other devices or receive information or data from other devices.

The transceiver 830 may include a transmitter and a receiver. The transceiver 830 may further include one or more antennas.

In some embodiments, the communication device 800 may specifically be an LMF entity of the embodiments of the present disclosure, and the communication device 800 may implement corresponding processes implemented by the LMF entity in various methods of the embodiments of the present disclosure, which will not be repeated herein for the sake of brevity.

In some embodiments, the communication device 800 may specifically be an access network device of the embodiments of the present disclosure, and the communication device 800 may implement corresponding processes implemented by the access network device in various methods of the embodiments of the present disclosure, which will not be repeated here for the sake of brevity.

In some embodiments, the communication device 800 may be specifically a terminal device of the embodiments of the present disclosure, and the communication device 800 may implement corresponding processes implemented by the terminal device in various methods of the embodiments of the present disclosure, which will not be repeated here for the sake of brevity.

FIG. 11 is a schematic structural diagram of an apparatus according to an embodiment of the present disclosure not covered by the invention. The apparatus 900 illustrated in FIG. 11 includes a processor 910 configured to invoke and execute a computer program from a memory, to implement the method in an embodiment of the present disclosure.

In some embodiments, as illustrated in FIG. 11, the apparatus 900 may also include a memory 920. The processor 910 may invoke and execute the computer program from the memory 920 to implement the method in embodiments of the present disclosure.

The memory 920 may be a separate device independent of the processor 910 or may be integrated into the processor 910.

In some embodiments, the apparatus 900 may also include an input interface 930. The processor 910 may control the input interface 930 to communicate with other devices or chips. In particular, the input interface 930 may obtain information or data from other devices or chips.

In some embodiments, the apparatus 900 may also include an output interface 940. The processor 910 may control the output interface 940 to communicate with other devices or chips. In particular, the output interface 940 may output information or data to other devices or chips.

In some embodiments, the apparatus may be applied to the LMF entity in the embodiments of the present disclosure, and the apparatus may implement corresponding processes implemented by the LMF entity in the respective methods of the embodiments of the present disclosure, which will not be repeated herein for the sake of brevity.

In some embodiments, the apparatus may be applied to the access network device in the embodiments of the present disclosure, and the apparatus may implement corresponding processes implemented by the access network device in the respective methods of the embodiments of the present disclosure, which will not be repeated herein for the sake of brevity.

In some embodiments, the apparatus may be applied to the terminal device in the embodiments of the present disclosure, and the apparatus may implement corresponding processes implemented by the terminal device in the respective methods of the embodiment of the present disclosure, which will not be repeated herein for the sake of brevity.

In some embodiments, the apparatus referred to in the embodiments of the present disclosure may also be a chip. For example, the apparatus may be system-level chips, system chips, chip systems or on-chip system chips.

FIG. 12 is a schematic block diagram of a communication system 1000 according to an embodiment of the present disclosure not covered by the invention. As illustrated in FIG. 12, the communication system 1000 includes a terminal device 1010, an access network device 1020 and an LMF entity 1030.

The terminal device 1010 may be configured to implement the corresponding functions implemented by the terminal device in the above methods, the access network device 1020 may be configured to implement the corresponding functions implemented by the access network device in the above methods, and the LMF entity 1030 may be configured to implement the corresponding functions implemented by the LMF entity in the above methods, which will not be repeated herein for the sake of brevity.

It is to be understood that the processor of the embodiment of the present disclosure may be an integrated circuit chip with signal processing capability. In the implementation process, each step of the above method embodiments may be completed by the instruction in the form of integrated logic circuit of hardware or software in the processor. The above processors may be general purpose processors, digital signal processors (DSPS), application specific integrated circuits (ASICs), field programmable gate arrays (FPGAs) or other programmable logic devices, discrete gate or transistor logic devices, and discrete hardware components. The disclosed methods, steps and logic block diagrams in the embodiments of the present disclosure may be implemented or executed. The general-purpose processor may be a microprocessor or the processor may be any conventional processor or the like. The steps of the methods disclosed in connection with the embodiments of the present disclosure may be directly embodied in the execution completion of the hardware decoding processor, or by the combination of the hardware and software modules in the decoding processor. The software module may be located in random memory, flash memory, read-only memory, programmable read-only memory or electrically erasable programmable memory, register and other mature storage media in the art. The storage medium is located in the memory, and the processor reads the information in the memory and completes the steps of the above method in combination with its hardware.

It is to be understood that the memory in the embodiments of the present disclosure may be volatile memory or non-volatile memory, or may include both volatile and non-volatile memory. The non-volatile memory may be read-only memory (ROM), programmable ROM (PROM), erasable PROM (EPROM), electrically EPROM (EEPROM) or flash memory. Volatile memory may be random access memory (RAM), which is used as an external cache. Many forms of RAM are available, such as static RAM (SRAM), dynamic RAM (DRAM), synchronous DRAM (SDRAM), double data rate SDRAM (DDR SDRAM, enhanced SDRAM (ESDRAM), synchlink DRAM (SLDRAM) and direct Rambus RAM (DR RAM). It is to be noted that the memory of the systems and methods described herein is intended to include, but is not limited to, these and any other suitable memory types.

It is to be understood that the memory is exemplary but not restrictive. For example, the memory in the embodiments of the present disclosure may also be static RAM (SRAM), dynamic RAM (DRAM), synchronous dynamic random access memory (synchronous DRAM, (SDRAM)), double data rate SDRAM (DDR SDRAM), enhanced SDRAM (ESDRAM), synchronous link DRAM (SLDRAM), direct RAM (DR RAM), etc. That is to say, the memory in the embodiments of the present disclosure is intended to include, but not limited to, these and any other suitable types of memory.

The embodiments of the present disclosure also provide a computer-readable storage medium for storing a computer program.

In some embodiments, the computer-readable storage medium may be applied to the LMF entity in the embodiment of the present disclosure, and the computer program enables the computer to execute the corresponding processes implemented by the LMF entity in the various methods of the embodiment of the present disclosure. For the sake of brevity, it will not be repeated here.

In some embodiments, the computer-readable storage medium may be applied to the access network device in the embodiment of the present disclosure, and the computer program enables the computer to perform the corresponding processes implemented by the access network device in the various methods of the embodiment of the present disclosure. For the sake of brevity, it will not be repeated here.

In some embodiments not covered by the invention, the computer-readable storage medium may be applied to the terminal device in the embodiment of the present disclosure, and the computer program enables the computer to execute the corresponding processes implemented by the terminal device in the various methods of the embodiment of the present disclosure. For the sake of brevity, it will not be repeated here.

Embodiments of the disclosure also provide a computer program product, including computer program instructions.

In some embodiments, the computer program product may be applied to the LMF entity in the embodiments of the present disclosure, and the computer program instruction enables the computer to perform the corresponding processes implemented by the LMF entity in the various methods of the embodiment of the disclosure. For the sake of brevity, it will not be repeated here.

In some embodiments, the computer program product may be applied to the access network device in the embodiments of the present disclosure, and the computer program instruction enables the computer to perform the corresponding processes implemented by the access network device in the various methods of the embodiment of the disclosure. For the sake of brevity, it will not be repeated here.

In some embodiments, the computer program product may be applied to the terminal device in the embodiments of the present disclosure, and the computer program instruction enables the computer to perform the corresponding processes implemented by the terminal device in the various methods of the embodiment of the disclosure. For the sake of brevity, it will not be repeated here.

Embodiments of the disclosure also provide a computer program.

In some embodiments, the computer program may be applied to the LMF entity in the embodiments of the present disclosure. When the computer program is run on the computer, the computer performs the corresponding processes realized by the LMF entity in each method of the embodiments of the disclosure. For the sake of brevity, it will not be described here.

In some embodiments, the computer program may be applied to the access network device in the embodiments of the present disclosure. When the computer program is run on the computer, the computer performs the corresponding processes realized by the access network device in each method of the embodiments of the disclosure. For the sake of brevity, it will not be described here.

In some embodiments, the computer program may be applied to the terminal device in the embodiments of the present disclosure. When the computer program is run on the computer, the computer performs the corresponding processes realized by the terminal device in each method of the embodiments of the disclosure. For the sake of brevity, it will not be described here.

Those of ordinary skill in the art may realize that the unit and algorithm operations of each example described in combination with the embodiments disclosed herein can be realized by the combination of electronic hardware, or computer software and electronic hardware. Whether these functions are performed in hardware or software depends on the specific application and design constraints of the technical solution.

Those skilled in the art can clearly understand that for the convenience and simplicity of the description, the specific working process of the system, device and unit described above can refer to the corresponding process in the embodiment of the method described above, and will not be described here.

In several embodiments provided by the present disclosure, it should be understood that the disclosed systems, devices and methods may be realized in other ways. For example, the embodiment of the device described above is only schematic. For example, the division of the unit is only a logical functional division, and there may be another division method in the actual implementation, for example, multiple units or components may be combined or integrated into another system, or some features may be ignored or not implemented. On the other hand, the mutual coupling or direct coupling or communication connection illustrated or discussed may be indirect coupling or communication connection through some interfaces, devices or units, and may be electrical, mechanical or other forms.

The unit described as a separation part may or may not be physically separated, and the component displayed as a unit may or may not be a physical unit, that is, it may be located in one place, or it may be distributed to multiple network units. Some or all of the units may be selected according to the actual requirements to achieve the purpose of the embodiment.

In addition, each functional unit in each embodiment of the present disclosure may be integrated into one processing unit, each unit may exist physically alone, or two or more units may be integrated into one unit.

If the function is realized in the form of a software functional unit and is sold or used as an independent product, it can be stored in a computer-readable storage medium. Based on such an understanding, the technical solution of the present disclosure, in essence or in the form of a software product, which is stored in a storage medium, includes multiple instructions for making a computer device (which may be a personal computer, a server, a network device, etc.) to perform all or part of the steps of the method according to each embodiment of the present disclosure. The aforementioned storage media include media that can store program code, such as U disk, mobile hard disk, read-only memory (ROM), random access memory (RAM), disk or optical disk.

The above are only the specific embodiments of the disclosure. The protection scope of the disclosure shall be subject to the protection scope of the claims.

## Claims

1. A method for wireless communication, comprising:
obtaining, by a location management function, LMF, entity, a positioning reference signal, PRS, capability or PRS configuration supported by at least one access network device, wherein the at least one access network device comprises at least one of: a base station in a serving cell of a terminal device, a transmission and reception point, TRP, in the serving cell of the terminal device, a base station in a neighboring cell of the serving cell of the terminal device, or a TRP in a neighboring cell of the serving cell of the terminal device;
generating, by the LMF entity based on the PRS capability or the PRS configuration supported by the at least one access network device, a plurality pieces of PRS configuration information and indexes of the plurality pieces of PRS configuration information;
sending, by the LMF entity, third information to the terminal device, wherein the third information indicates the plurality pieces of PRS configuration information and the indexes of the plurality pieces of PRS configuration information;
receiving, by the LMF entity, request information from the terminal device, wherein the request information requests PRS configuration on demand;
sending (S210), by the LMF entity, first information to the at least one access network device, wherein the first information indicates an activation of target PRS configuration information, and the first information comprises the target PRS configuration information or an index of the target PRS configuration information;
receiving, by the LMF entity, fourth information from the at least one access network device, wherein the fourth information indicates a refusal to activate the target PRS configuration information, or, the fourth information indicates an update of the PRS capability or PRS configuration supported by the at least one access network device; and
in a case that the fourth information indicates the update of the PRS capability or PRS configuration supported by the at least one access network device,
generating new PRS configuration information and
sending the new PRS configuration information and index corresponding to the new PRS configuration information to the terminal device and the at least one access network device.

2. The method of claim 1, wherein
the request information comprises PRS configuration information corresponding to a current service type or a positioning accuracy, or the request information comprises an index of PRS configuration information corresponding to a current service type or a positioning accuracy.

3. A method for wireless communication, comprising:
sending, by an access network device, a positioning reference signal, PRS, capability or PRS configuration supported by the access network device to a location management function, LMF, entity, wherein the access network device comprises one of: a base station in a serving cell of a terminal device, a transmission and reception point, TRP, in the serving cell of the terminal device, a base station in a neighboring cell of the serving cell of the terminal device, or a TRP in a neighboring cell of the serving cell of the terminal device;
receiving (S210), by the access network device, first information from the LMF entity, wherein the first information indicates an activation of target PRS configuration information, and the first information comprises the target PRS configuration information or an index of the target PRS configuration information; and
sending, by the access network device, fourth information to the LMF entity, wherein the fourth information indicates a refusal to activate the target PRS configuration information, or the fourth information indicates an update of the PRS capability or PRS configuration supported by the access network device, and
in a case that the fourth information indicates the update of the PRS capability,
receiving a new PRS configuration information and index corresponding to the new PRS configuration information by the access network device.

4. A location management function, LMF, entity (500), comprising:
a processing unit (520), configured to:
obtain a positioning reference signal, PRS, capability or PRS configuration supported by at least one access network device, wherein the at least one access network device comprises at least one of: a base station in a serving cell of a terminal device, a transmission and reception point, TRP, in the serving cell of the terminal device, a base station in a neighboring cell of the serving cell of the terminal device, or a TRP in a neighboring cell of the serving cell of the terminal device; and
generate, based on the PRS capability or the PRS configuration supported by the at least one access network device, a plurality pieces of PRS configuration information and indexes of the plurality pieces of PRS configuration information; and
in a case that the fourth information indicates the update of the PRS capability or PRS configuration supported by the at least one access network device, generating new PRS configuration information, and
a communication unit (510), configured to:
send third information to the terminal device, wherein the third information indicates the plurality pieces of PRS configuration information and the indexes of the plurality pieces of PRS configuration information;
receive request information from the terminal device, wherein the request information requests PRS configuration on demand;
send first information to the at least one access network device, wherein the first information indicates an activation of target PRS configuration information, and the first information comprises the target PRS configuration information or an index of the target PRS configuration information;
receive fourth information from the at least one access network device, wherein the fourth information indicates a refusal to activate the target PRS configuration information, or, the fourth information indicates an update of the PRS capability or PRS configuration supported by the at least one access network device; and
in a case that the fourth information indicates the update of the PRS capability or PRS configuration supported by the at least one access network device, sending the new PRS configuration information and index corresponding to the new PRS configuration information to the terminal device and the at least one access network device.

5. The LMF entity of claim 4, wherein
the request information comprises PRS configuration information corresponding to a current service type or a positioning accuracy, or the request information comprises an index of PRS configuration information corresponding to a current service type or a positioning accuracy.

6. An access network device (600), comprising:
a communication unit (610), configured to:
send a positioning reference signal, PRS, capability or PRS configuration supported by the access network device to a location management function, LMF, entity, wherein the access network device comprises one of: a base station in a serving cell of a terminal device, a transmission and reception point, TRP, in the serving cell of the terminal device, a base station in a neighboring cell of the serving cell of the terminal device, or a TRP in a neighboring cell of the serving cell of the terminal device;
receive first information from the LMF entity, wherein the first information indicates an activation of target PRS configuration information, and the first information comprises the target PRS configuration information or an index of the target PRS configuration information; and
send fourth information to the LMF entity, wherein the fourth information indicates a refusal to activate the target PRS configuration information, or the fourth information indicates an update of the PRS capability or PRS configuration supported by the access network device, and
in a case that the fourth information indicates the update of the PRS capability,
receive a new PRS configuration information and index corresponding to the new PRS configuration information by the access network device.

7. A computer-readable storage medium storing a computer program that, when executed by a processor of a location management function, LMF, entity, causes the processor of the LMF entity to perform the method of claim 1 or 2.

8. A computer-readable storage medium storing a computer program that, when executed by a processor of an access network device, causes the processor of the access network device to perform the method of claim 3.

## Patentansprüche

1. Verfahren für eine drahtlose Kommunikation, umfassend:
Erhalten, durch eine Standortverwaltungsfunktions-, LMF, Entität, einer Positionsbestimmungsreferenzsignal-, PRS, Fähigkeit oder PRS-Konfiguration, die durch mindestens ein Zugangsnetzwerkgerät unterstützt wird, wobei das mindestens eine Zugangsnetzwerkgerät mindestens eines von Folgendem umfasst: eine Basisstation in einer Serving-Zelle eines Endgeräts, einen Übertragungs- und Empfangspunkt, TRP, in der Serving-Zelle des Endgeräts, eine Basisstation in einer Nachbarzelle der Serving-Zelle des Endgeräts oder einen TRP in einer Nachbarzelle der Serving-Zelle des Endgeräts;
Erzeugen, durch die LMF-Entität basierend auf der PRS-Fähigkeit oder der PRS-Konfiguration, die durch das mindestens eine Zugangsnetzwerkgerät unterstützt wird, einer Mehrzahl von Teilen von PRS-Konfigurationsinformationen und Indizes der Mehrzahl von Teilen von PRS-Konfigurationsinformationen;
Senden, durch die LMF-Entität, von dritten Informationen an das Endgerät, wobei die dritten Informationen die Mehrzahl von Teilen von PRS-Konfigurationsinformationen und die Indizes der Mehrzahl von Teilen von PRS-Konfigurationsinformationen anzeigen;
Empfangen, durch die LMF-Entität, von Anforderungsinformationen von dem Endgerät, wobei die Anforderungsinformationen eine PRS-Konfiguration bei Bedarf anfordern;
Senden (S210), durch die LMF-Entität, von ersten Informationen an das mindestens eine Zugangsnetzwerkgerät, wobei die ersten Informationen eine Aktivierung von Ziel-PRS-Konfigurationsinformationen anzeigen und die ersten Informationen die Ziel-PRS-Konfigurationsinformationen oder einen Index der Ziel-PRS-Konfigurationsinformationen umfassen;
Empfangen, durch die LMF-Entität, von vierten Informationen von dem mindestens einen Zugangsnetzwerkgerät, wobei die vierten Informationen eine Ablehnung einer Aktivierung der Ziel-PRS-Konfigurationsinformationen anzeigen oder die vierten Informationen eine Aktualisierung der PRS-Fähigkeit oder PRS-Konfiguration, die durch das mindestens eine Zugangsnetzwerkgerät unterstützt wird, anzeigen; und
falls die vierten Informationen die Aktualisierung der PRS-Fähigkeit oder PRS-Konfiguration, die durch das mindestens eine Zugangsnetzwerkgerät unterstützt wird, anzeigen,
Erzeugen von neuen PRS-Konfigurationsinformationen
und
Senden der neuen PRS-Konfigurationsinformationen und eines Index, der den neuen PRS-Konfigurationsinformationen entspricht, an das Endgerät und das mindestens eine Zugangsnetzwerkgerät.

2. Verfahren nach Anspruch 1, wobei
die Anforderungsinformationen PRS-Konfigurationsinformationen umfassen, die einer aktuellen Dienstart oder einer Positionsbestimmungsgenauigkeit entsprechen, oder wobei die Anforderungsinformationen einen Index von PRS-Konfigurationsinformationen, die einer aktuellen Dienstart oder einer Positionsbestimmungsgenauigkeit entsprechen, umfassen.

3. Verfahren für eine drahtlose Kommunikation, umfassend:
Senden, durch ein Zugangsnetzwerkgerät, einer Positionsbestimmungsreferenzsignal-, PRS, Fähigkeit oder PRS-Konfiguration, die durch das Zugangsnetzwerkgerät unterstützt wird, an eine Standortverwaltungsfunktions-, LMF, Entität, wobei das Zugangsnetzwerkgerät eines von Folgendem umfasst: eine Basisstation in einer Serving-Zelle eines Endgeräts, einen Übertragungs- und Empfangspunkt, TRP, in der Serving-Zelle des Endgeräts, eine Basisstation in einer Nachbarzelle der Serving-Zelle des Endgeräts oder einen TRP in einer Nachbarzelle der Serving-Zelle des Endgeräts;
Empfangen (S210), durch das Zugangsnetzwerkgerät, von ersten Informationen von der LMF-Entität, wobei die ersten Informationen eine Aktivierung von Ziel-PRS-Konfigurationsinformationen anzeigen und die ersten Informationen die Ziel-PRS-Konfigurationsinformationen oder einen Index der Ziel-PRS-Konfigurationsinformationen umfassen; und
Senden, durch das Zugangsnetzwerkgerät, von vierten Informationen an die LMF-Entität, wobei die vierten Informationen eine Ablehnung einer Aktivierung der Ziel-PRS-Konfigurationsinformationen anzeigen oder die vierten Informationen eine Aktualisierung der PRS-Fähigkeit oder PRS-Konfiguration, die durch das Zugangsnetzwerkgerät unterstützt wird, anzeigen, und
falls die vierten Informationen die Aktualisierung der PRS-Fähigkeit anzeigen,
Empfangen von neuen PRS-Konfigurationsinformationen und eines Index, der den neuen PRS-Konfigurationsinformationen entspricht, durch das Zugangsnetzwerkgerät.

4. Standortverwaltungsfunktions-, LMF, Entität (500), umfassend:
eine Verarbeitungseinheit (520), die zu Folgendem konfiguriert ist:
Erhalten einer Positionsbestimmungsreferenzsignal-, PRS, Fähigkeit oder PRS-Konfiguration, die durch mindestens ein Zugangsnetzwerkgerät unterstützt wird, wobei das mindestens eine Zugangsnetzwerkgerät mindestens eines von Folgendem umfasst: eine Basisstation in einer Serving-Zelle eines Endgeräts, einen Übertragungs- und Empfangspunkt, TRP, in der Serving-Zelle des Endgeräts, eine Basisstation in einer Nachbarzelle der Serving-Zelle des Endgeräts oder einen TRP in einer Nachbarzelle der Serving-Zelle des Endgeräts; und
Erzeugen, basierend auf der PRS-Fähigkeit oder der PRS-Konfiguration, die durch das mindestens eine Zugangsnetzwerkgerät unterstützt wird, einer Mehrzahl von Teilen von PRS-Konfigurationsinformationen und Indizes der Mehrzahl von Teilen von PRS-Konfigurationsinformationen; und
falls die vierten Informationen die Aktualisierung der PRS-Fähigkeit oder PRS-Konfiguration, die durch das mindestens eine Zugangsnetzwerkgerät unterstützt wird, anzeigen, Erzeugen von neuen PRS-Konfigurationsinformationen, und
eine Kommunikationseinheit (510), die zu Folgendem konfiguriert ist:
Senden von dritten Informationen an das Endgerät, wobei die dritten Informationen die Mehrzahl von Teilen von PRS-Konfigurationsinformationen und die Indizes der Mehrzahl von Teilen von PRS-Konfigurationsinformationen anzeigen;
Empfangen von Anforderungsinformationen von dem Endgerät, wobei die Anforderungsinformationen eine PRS-Konfiguration bei Bedarf anfordern;
Senden von ersten Informationen an das mindestens eine Zugangsnetzwerkgerät, wobei die ersten Informationen eine Aktivierung von Ziel-PRS-Konfigurationsinformationen anzeigen und die ersten Informationen die Ziel-PRS-Konfigurationsinformationen oder einen Index der Ziel-PRS-Konfigurationsinformationen umfassen;
Empfangen von vierten Informationen von dem mindestens einen Zugangsnetzwerkgerät, wobei die vierten Informationen eine Ablehnung einer Aktivierung der Ziel-PRS-Konfigurationsinformationen anzeigen oder die vierten Informationen eine Aktualisierung der PRS-Fähigkeit oder PRS-Konfiguration, die durch das mindestens eine Zugangsnetzwerkgerät unterstützt wird, anzeigen; und
falls die vierten Informationen die Aktualisierung der PRS-Fähigkeit oder PRS-Konfiguration anzeigen, die durch das mindestens eine Zugangsnetzwerkgerät unterstützt wird, Senden der neuen PRS-Konfigurationsinformationen und eines Index, der den neuen PRS-Konfigurationsinformationen entspricht, an das Endgerät und das mindestens eine Zugangsnetzwerkgerät.

5. LMF-Entität nach Anspruch 4, wobei
die Anforderungsinformationen PRS-Konfigurationsinformationen umfassen, die einer aktuellen Dienstart oder einer Positionsbestimmungsgenauigkeit entsprechen, oder die Anforderungsinformationen einen Index von PRS-Konfigurationsinformationen, die einer aktuellen Dienstart oder einer Positionsbestimmungsgenauigkeit entsprechen, umfassen.

6. Zugangsnetzwerkgerät (600), umfassend:
eine Kommunikationseinheit (610), die zu Folgendem konfiguriert ist:
Senden einer Positionsbestimmungsreferenzsignal-, PRS, Fähigkeit oder PRS-Konfiguration, die durch das Zugangsnetzwerkgerät unterstützt wird, an eine Standortverwaltungsfunktions-, LMF, Entität, wobei das Zugangsnetzwerkgerät eines von Folgendem umfasst: eine Basisstation in einer Serving-Zelle eines Endgeräts, einen Übertragungs- und Empfangspunkt, TRP, in der Serving-Zelle des Endgeräts, eine Basisstation in einer Nachbarzelle der Serving-Zelle des Endgeräts oder einen TRP in einer Nachbarzelle der Serving-Zelle des Endgeräts;
Empfangen von ersten Informationen von der LMF-Entität, wobei die ersten Informationen eine Aktivierung von Ziel-PRS-Konfigurationsinformationen anzeigen und die ersten Informationen die Ziel-PRS-Konfigurationsinformationen oder einen Index der Ziel-PRS-Konfigurationsinformationen umfassen; und
Senden von vierten Informationen an die LMF-Entität, wobei die vierten Informationen eine Ablehnung einer Aktivierung der Ziel-PRS-Konfigurationsinformationen anzeigen oder die vierten Informationen eine Aktualisierung der PRS-Fähigkeit oder PRS-Konfiguration, die durch das Zugangsnetzwerkgerät unterstützt wird, anzeigen, und
falls die vierten Informationen die Aktualisierung der PRS-Fähigkeit anzeigen,
Empfangen von neuen PRS-Konfigurationsinformationen und eines Index, der den neuen PRS-Konfigurationsinformationen entspricht, durch das Zugangsnetzwerkgerät.

7. Computerlesbares Speichermedium, das ein Computerprogramm speichert, das, wenn es durch einen Prozessor einer Standortverwaltungsfunktions-, LMF, Entität ausgeführt wird, den Prozessor der LMF-Entität veranlasst, das Verfahren nach Anspruch 1 oder 2 durchzuführen.

8. Computerlesbares Speichermedium, das ein Computerprogramm speichert, das, wenn es durch einen Prozessor eines Zugangsnetzwerkgeräts ausgeführt wird, den Prozessor des Zugangsnetzwerkgeräts veranlasst, das Verfahren nach Anspruch 3 durchzuführen.

## Revendications

1. Procédé de communication sans fil comprenant :
l'obtention, par une entité de fonction de gestion de localisation, LMF, d'une capacité d'un signal de référence de positionnement, PRS, ou d'une configuration PRS prise en charge par au moins un dispositif de réseau d'accès, dans lequel l'au moins un dispositif de réseau d'accès comprend au moins un élément parmi : une station de base dans une cellule de service d'un dispositif terminal, un point de transmission et de réception, TRP, dans la cellule de service du dispositif terminal, une station de base dans une cellule voisine de la cellule de service du dispositif terminal, ou un TRP dans une cellule voisine de la cellule de service du dispositif terminal ;
la génération, par l'entité LMF sur la base de la capacité PRS ou de la configuration PRS prise en charge par l'au moins un dispositif de réseau d'accès, d'une pluralité d'éléments d'informations de configuration PRS et d'indices parmi la pluralité d'éléments d'informations de configuration PRS ;
l'envoi, par l'entité LMF, de troisièmes informations au dispositif terminal, dans lequel les troisièmes informations indiquent la pluralité d'éléments d'informations de configuration PRS et les indices parmi la pluralité d'éléments d'informations de configuration PRS ;
la réception, par l'entité LMF, d'informations de requête à partir du dispositif terminal, dans lequel les informations de requête demandent une configuration PRS à la demande ;
l'envoi (S210), par l'entité LMF, de premières informations à l'au moins un dispositif de réseau d'accès, dans lequel les premières informations indiquent une activation d'informations de configuration PRS cibles, et les premières informations comprennent les informations de configuration PRS cibles ou un indice des informations de configuration PRS cibles ;
la réception, par l'entité LMF, de quatrièmes informations à partir de l'au moins un dispositif de réseau d'accès, dans lequel les quatrièmes informations indiquent un refus d'activer les informations de configuration PRS cibles ou les quatrièmes informations indiquent une mise à jour de la capacité PRS ou d'une configuration PRS prise en charge par l'au moins un dispositif de réseau d'accès ; et
au cas où les quatrièmes informations indiquent la mise à jour de la capacité PRS ou de la configuration PRS prise en charge par l'au moins un dispositif de réseau d'accès,
générer de nouvelles informations de configuration PRS et
envoyer les nouvelles informations de configuration PRS et l'indice correspondant aux nouvelles informations de configuration PRS au dispositif terminal et à l'au moins un dispositif de réseau d'accès.

2. Procédé selon la revendication 1, dans lequel
les informations de requête comprennent des informations de configuration PRS correspondant à un type de service actuel ou à une précision de positionnement, ou les informations de requête comprennent un indice des informations de configuration PRS correspondant à un type de service actuel ou à une précision de positionnement.

3. Procédé de communication sans fil, comprenant :
l'envoi, par un dispositif de réseau d'accès, d'une capacité de signal de référence de positionnement, PRS, ou d'une configuration PRS prise en charge par le dispositif de réseau d'accès à une entité de fonction de gestion de localisation, LMF, dans lequel le dispositif de réseau d'accès comprend au moins un élément parmi : une station de base dans une cellule de service d'un dispositif terminal, un point de transmission et de réception, TRP, dans la cellule de service du dispositif terminal, une station de base dans une cellule voisine de la cellule de service du dispositif terminal, ou un TRP dans une cellule voisine de la cellule de service du dispositif terminal ;
la réception (S210), par le dispositif de réseau d'accès, de premières informations à partir de l'entité LMF, dans lequel les premières informations indiquent une activation d'informations de configuration PRS cibles, et les premières informations comprennent les informations de configuration PRS cibles ou un indice des informations de configuration PRS cibles ; et
l'envoi, par le dispositif de réseau d'accès, de quatrièmes informations à l'entité LMF, dans lequel les quatrièmes informations indiquent un refus d'activer les informations de configuration PRS cibles, ou les quatrièmes informations indiquent une mise à jour de la capacité PRS ou une configuration PRS prise en charge par le dispositif de réseau d'accès, et
au cas où les quatrièmes informations indiquent la mise à jour de la capacité PRS,
la réception de nouvelles informations de configuration PRS et de l'indice correspondant aux nouvelles informations de configuration PRS par le dispositif de réseau d'accès.

4. Entité de fonction de gestion de localisation, LMF (500), comprenant :
une unité de traitement (520), configurée pour :
obtenir une capacité d'un signal de référence de positionnement, PRS, ou une configuration PRS prise en charge par au moins un dispositif de réseau d'accès, dans lequel l'au moins un dispositif de réseau d'accès comprend au moins un élément parmi : une station de base dans une cellule de service d'un dispositif terminal, un point de transmission et de réception, TRP, dans la cellule de service du dispositif terminal, une station de base dans une cellule voisine de la cellule de service du dispositif terminal, ou un TRP dans une cellule voisine de la cellule de service du dispositif terminal ; et
générer, sur la base de la capacité PRS ou de la configuration PRS prise en charge par l'au moins un dispositif de réseau d'accès, une pluralité d'éléments d'informations de configuration PRS et des indices parmi la pluralité d'éléments d'informations de configuration PRS ; et
au cas où les quatrièmes informations indiquent la mise à jour de la capacité PRS ou de la configuration PRS prise en charge par l'au moins un dispositif de réseau d'accès, générer de nouvelles informations de configuration PRS, et
une unité de communication (510), configurée pour :
envoyer les troisièmes informations au dispositif terminal, dans lequel les troisièmes informations indiquent la pluralité d'éléments d'informations de configuration PRS et les indices parmi la pluralité d'éléments d'informations de configuration PRS ;
recevoir les informations de requête à partir du dispositif terminal, dans lequel les informations de requête demandent une configuration PRS à la demande ;
envoyer les premières informations à l'au moins un dispositif de réseau d'accès, dans lequel les premières informations indiquent une activation d'informations de configuration PRS cibles, et les premières informations comprennent les informations de configuration PRS cibles ou un indice des informations de configuration PRS cibles ;
recevoir les quatrièmes informations à partir de l'au moins un dispositif de réseau d'accès, dans lequel les quatrièmes informations indiquent un refus d'activer les informations de configuration PRS cibles ou les quatrièmes informations indiquent une mise à jour de la capacité PRS ou une configuration PRS prise en charge par l'au moins un dispositif de réseau d'accès ; et
au cas où les quatrièmes informations indiquent la mise à jour de la capacité PRS ou de la configuration PRS prise en charge par l'au moins un dispositif de réseau d'accès, envoyer les nouvelles informations de configuration PRS et l'indice correspondant aux nouvelles informations de configuration PRS au dispositif terminal et à l'au moins un dispositif de réseau d'accès.

5. Entité LMF selon la revendication 4, dans lequel
les informations de requête comprennent des informations de configuration PRS correspondant à un type de service actuel ou à une précision de positionnement, ou les informations de requête comprennent un indice des informations de configuration PRS correspondant à un type de service actuel ou à une précision de positionnement.

6. Dispositif de réseau d'accès (600), comprenant :
une unité de communication (610), configurée pour :
envoyer une capacité de signal de référence de positionnement, PRS, ou une configuration PRS prise en charge par le dispositif de réseau d'accès à une entité de fonction de gestion de localisation, LMF, dans lequel le dispositif de réseau d'accès comprend au moins un élément parmi : une station de base dans une cellule de service d'un dispositif terminal, un point de transmission et de réception, TRP, dans la cellule de service du dispositif terminal, une station de base dans une cellule voisine de la cellule de service du dispositif terminal, ou un TRP dans une cellule voisine de la cellule de service du dispositif terminal ;
la réception des premières informations à partir de l'entité LMF, dans lequel les premières informations indiquent une activation des informations de configuration PRS cibles, et les premières informations comprennent les informations de configuration PRS cibles ou un indice des informations de configuration PRS cibles ; et
l'envoi de quatrièmes informations à l'entité LMF, dans lequel les quatrièmes informations indiquent un refus d'activer les informations de configuration PRS cibles ou les quatrièmes informations indiquent une mise à jour de la capacité PRS ou de la configuration PRS prise en charge par le dispositif de réseau d'accès, et
au cas où les quatrièmes informations indiquent la mise à jour de la capacité PRS,
recevoir de nouvelles informations de configuration PRS et l'indice correspondant aux nouvelles informations de configuration PRS par le dispositif de réseau d'accès.

7. Support de stockage lisible par ordinateur stockant un programme informatique qui, lorsqu'il est exécuté par un processeur d'une entité de fonction de gestion de localisation, LMF, amène le processeur de l'entité LMF à exécuter le procédé selon la revendication 1 ou 2.

8. Support de stockage lisible par ordinateur stockant un programme informatique qui, lorsqu'il est exécuté par un processeur d'un dispositif de réseau d'accès, amène le processeur du dispositif de réseau d'accès à exécuter le procédé selon la revendication 3.
